Europäisches Patentamt

European Patent Office

Office européen des brevets

(11) Veröffentlichungsnummer: **0 280 777 B1**

# EUROPÄISCHE PATENTSCHRIFT

(45) Veröffentlichungstag der Patentschrift: **13.03.91**

(51) Int. Cl.⁵: **G01B 7/00**, G01B 5/00

(21) Anmeldenummer: **87118029.5**

(22) Anmeldetag: **05.12.87**

(54) **Mehrkoordinaten-Tastkopf.**

(30) Priorität: **02.03.87 DE 3706767**

(43) Veröffentlichungstag der Anmeldung:
**07.09.88 Patentblatt 88/36**

(45) Bekanntmachung des Hinweises auf die
Patenterteilung:
**13.03.91 Patentblatt 91/11**

(84) Benannte Vertragsstaaten:
**AT CH DE ES FR GB IT LI NL SE**

(56) Entgegenhaltungen:
**EP-A- 0 197 243**
**DE-A- 2 757 453**
**FR-A- 2 573 865**

**M. POLLERMANN: "Bauelemente der physikalischen Technik", 2. Auflage, Kapitel 4, 1972, Seiten 62-84: "Führungen und Lagerungen", New York, US**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Ernst, Alfons, Dipl.-Ing.**
**Traunring 62**
**W-8225 Traunreut(DE)**

Rank Xerox (UK) Business Services

## Beschreibung

Die Erfindung betrifft einen Mehrkoordinaten-Tastkopf gemäß dem Oberbegriff des Anspruchs 1.

Es ist eine Vielzahl messender und schaltender Mehrkoordinaten-Tastköpfe bekannt. Bei beiden Ausführungsarten ist es besonders wichtig, daß der Taststift nach Auslenkungen in beliebige Richtungen wieder in seine definierte Nullage zurückkehrt. Diverse Versuche, Lagerungen des Taststiftes im Tastergehäuse besonders vorteilhaft auszubilden, wurden deshalb unternommen.

In der DE-OS 28 41 424 ist ein Tastkopf angegeben, der eine Dreipunktlagerung aufweist. Im Tastkopfgehäuseboden sind drei V-Nuten sternförmig angeordnet. Am Tasterhalter sind drei Stifte mit sphärischer Oberfläche fest angebracht. Der Tasterhalter wird mittels einer Feder in Richtung des Tastkopfgehäusebodens gedrückt und die Stifte nehmen in den zugeordneten V-Nuten eine festgelegte Position ein, in welche sie nach einer Auslenkung des Taststiftes wieder zurückkehren sollen.

Ferner ist aus der EP-A2-088 0 596 ein Tastkopf mit einer Lageranordnung bekannt, die ebenfalls drei Lagerstellen aufweist. Die Lagerstellen sind in einer Ebene gleichmäßig konzentrisch zur Taststiftachse verteilt. Im Tastkopfgehäuseboden sind drei Kugeln angeordnet, welche zur Montage parallel zur Taststiftachse verschiebbar sind. Die drei Gegenlager am Tasterhalter sind unterschiedlich ausgebildet. Ein Gegenlager ist als Verdrehsicherung in Form einer Kegel-Bohrung ausgebildet. Das zweite Gegenlager weist eine V-Nut auf, welche fest zum Mittelpunkt des Tasterhalters ausgerichtet ist. Ein drittes Gegenlager ist eine ebene Auflage, senkrecht zur Taststiftachse und senkrecht zur Kraftkomponente der Andruckfeder.

Durch unterschiedliche Bauformen der einzelnen Lagerstellen wurde bei dem in der EP-A2-0 088 596 angegebenen Stand der Technik versucht, eine statische Überbestimmung, aber auch Unterbestimmung zu vermeiden. Durch die unterschiedliche Ausgestaltung der einzelnen Lagerstellen (Kugel/Kegel, Kugel/Prisma und Kugel/Ebene) ist jedoch die Elastizität der einzelnen Lagerstellen auch unterschiedlich, was sich ungünstig auf die Genauigkeit des Schaltpunktes auswirkt.

Diese Arten der Lagerungen sind als klassische Lagerungen zu bezeichnen, die nach den "Maxwellschen Bedingungen" gestaltet sind (s. M. Pollermann, "Bauelemente der physikalischen Technik", 2. Auflage, Kapitel 4 - Führungen und Lagerungen -; Springer Verlag 1972).

Darüber hinaus ist es bei Mehrkoordinaten-Tastköpfen bekannt, daß sich Meßkraftunterschiede und die damit verbundenen biegungsbedingten Schaltpunktdifferenzen bei verschiedenen Antastrichtungen durch die Erhöhung der Anzahl von Lagerstellen vermindert. Bei einer Erhöhung der Anzahl von Lagerstellen erhöht sich aber der Aufwand für die Herstellung der Passungslagerstellen erheblich, und es besteht die Gefahr, daß das System statisch überbestimmt wird. Als Beispiel für einen Tastkopf mit mehreren Lagerstellen sei die DE-OS 27 42 817 genannt.

Dort ist am Tasterhalter eine Gruppe von Kugeln konzentrisch in einer V-Nut angebracht. Im Gehäuse befindet sich ebenfalls eine konzentrische V-Nut, in der sich eine zweite Gruppe von Kugeln befindet. Die Kugelgruppen liegen sich gegenüber und jede Kugel der einen Kugelgruppe befindet sich zwischen zwei benachbarten Kugeln der anderen Kugelgruppe.

Jede Kugel hat eine Oberfläche, die sich an die beiden gewölbten Oberflächen zweier benachbarter Kugeln anlegen kann. Eine Feder drängt den Tasterhalter zum Gehäuse hin, und die Kugeln berühren sich aufgrund der von der Feder ausgeübten Vorspannkraft mit ihren Oberflächen an Punkten.

Um sicherzustellen, daß zwischen jeder Kugel der einzelnen Kugelgruppe und zwei benachbarten Kugeln der anderen Kugelgruppe die gewünschte Berührung stattfindet, läßt man die Kugeln anfänglich frei in ihren Nuten rollen, wo sie sich dann aufgrund der Federkraft und der Wölbung der Flächen in Positionen einstellen in welchen alle Kugeln der einen Kugelgruppe alle Kugeln der anderen Kugelgruppe berühren. Die von zwei benachbarten Kugeln der einen Kugelgruppe gebildeten Flächen sind natürlich in der gleichen Weise zueinander gewölbt wie die Flächen zweier benachbarter Kugeln der anderen Kugelgruppe und beide Kugelgruppen verhalten sich, was die Einnahme der gegenseitigen Positionen in den Nuten betrifft, in der gleichen Weise. Um ein vollständiges und schnelles Ausrichten der Kugeln zu erzielen, kann eine verhältnismäßig starke Feder verwendet und der Tastkopf vibriert werden, wobei der Taster mittels einer Vorrichtung axial gehalten wird.

Die Kugeln werden in der beschriebenen Weise eingestellt und ausgerichtet, während vorher in die Nuten eingebrachtes Epoxyharz noch weich ist. Das als Klebstoff dienende Harz härtet aus, während die relative Lage des Gehäuses und des Tasters unverändert beibehalten wird.

Bei dieser Lagerung des Taststiftes haben alle Auflagepunkte gleiche Elastizitätseigenschaften, aber die Montage ist relativ aufwendig.

Der vorliegenden Erfindung liegt die Aufgabe zugrunde, eine Lagerung für einen Mehrkoordinaten-Tastkopf zu schaffen, die eine hohe und gut reproduzierbare Schaltgenauigkeit gewährleistet, die aus einfachen Grund-Bauelementen besteht und verhältnismäßig einfach zu montieren ist.

Diese Aufgabe wird von einem Mehrkoordinaten-Tastkopf mit den Merkmalen des Anspruches 1 gelöst. Die abhängigen Ansprüche geben vorteilhafte Ausgestaltungen er Erfindung an, mit denen auch eine Verdrehsicherung realisiert werden kann.

Die besonderen Vorteile der Erfindung liegen darin, daß an jeder einzelnen Lagerstelle die Oberflächenbereiche in Form der Schnittflächen lediglich tangential an den Oberflächen der Lagerkörper anliegen und sich frei einstellen können. Die Herstellung der Gegenkörper ist äußerst einfach, da ein schräger Schnitt zur Drehachse der zylindrischen Gegenkörper auf vielfältigste Weise möglich ist. Besondere Anforderungen an die Güte der Oberfläche müssen nicht gestellt werden, da ohnehin nur jeweils eine Punktberührung vorgesehen ist. Um Überbestimmung zu verhindern, können sowohl die Lagerkörper als auch die ihnen zugeordneten Gegenkörper hinreichend viele Freiheitsgrade zur gegenseitigen Anpassung und Einjustierung bei der Montage aufweisen.

Die Erfindung wird anhand von Ausführungsbeispielen mit Hilfe der Zeichnungen erläutert.

Es zeigt

Figur 1     einen Axialschnitt durch einen Tastkopf,

Figur 2     einen Schnitt entlang der Linie II-II des Tastkopfes aus Figur 1 mit abgenommenem Tasterhalter,

Figur 3     eine Anzahl von zylindrischen Gegenkörpern in schematischer Darstellung,

Figur 4     einen Ausschnitt des Tastkopfes mit schrägen Stützflächen-Zylindern und

Figur 5     einen Ausschnitt des Tastkopfes mit Formteilen und schrägen Stützflächen.

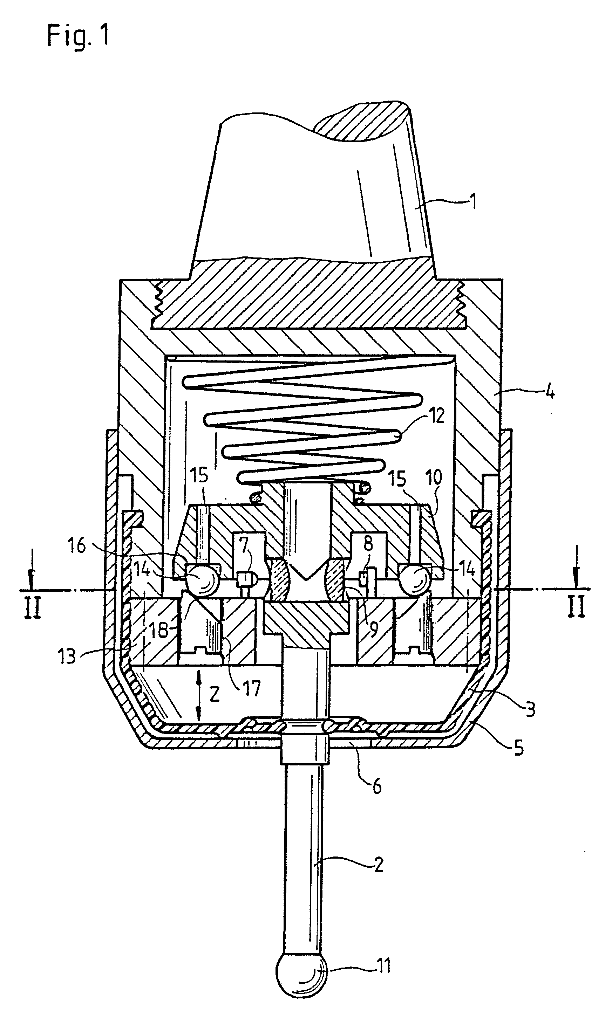

In Figur 1 ist der gesamte Aufbau eines Mehrkoordinaten-Tastkopfes ersichtlich. Dieser gezeigte Taster ist als schaltender Taster ausgeführt. Durch einen Konus 1 kann der Taster in eine Spindel einer nicht dargestellten Meß- oder Bearbeitungsmaschine eingesetzt werden. Die Auslenkung eines Taststiftes 2 ist in nahezu alle Richtungen möglich. Eine Dichtung 3 schließt den Zwischenraum zwischen einem Tastkopfgehäuse 4 und dem Taststift 2. Ein Blechschutz 5 verhindert die Beschädigung der Dichtung 3 durch heiße Späne, läßt aber einen freien Raum 6, der dem Taststift 2 eine begrenzte Auslenkung aus seiner Nullage gestattet.

Eine Detektoranordnung 7, 8, 9 zur Erfassung der Auslenkung des Taststiftes 2 gibt bei einem bestimmten Auslenkungsbetrag einen Antastimpuls ab, welcher zur Steuerung einer Werkzeugmaschine oder zur Bestimmung des Zeitpunktes der Meßwertübernahme einer Koordinaten-Meßmaschine herangezogen wird. Die Detektoranordnung 7, 8, 9 besteht aus einem im Tastkopfgehäuse 4 feststehenden optischen Sender 7 und einem dazu ausgerichteten ebenfalls feststehenden Differentialphotoelement 8. In der optischen Achse der beiden Elemente 7, 8 ist ein Linsensystem 9 fest am beweglichen Taststift 2 angebracht.

Ein Tasterhalter 10 ist mit dem Taststift 2 fest verbunden, welcher am freien Ende eine Antastkugel 11 besitzt. Eine Fläche des Tasterhalters 10 steht mit dem Tastkopfgehäuse 4 mittels einer Feder 12 in Verbindung. Die Gegenfläche ist ein Teil der Lagerung zwischen dem Tasterhalter 10 und dem Tastkopfgehäuseboden 13. Diese Lagerung muß exakt ausgeführt sein, da eine statische Unter- bzw. Überbestimmung Meßfehler verursacht, wenn eine hinreichende Reproduzierbarkeit nicht gewährleistet ist.

Während eines Antastvorganges an ein Werkstück wird der Tasterhalter 10 durch die Feder 12 so lange in seiner Nullage gehalten, wie deren Kraft der Wirkung des Kontaktdrucks der Antastkugel 11 auf das Werkstück entgegenwirkt. Die Feder 12 verhindert, daß der Tasterhalter 10 in der Lagerung verschwenkt bzw. abgehoben wird, wenn die Antastkraft unter einem bestimmten Wert liegt. So lange der Tasterhalter 10 durch die Feder 12 gegen den Tastkopfgehäuseboden 13 gedrückt wird, bilden Tasterhalter 10 und Tastkopfgehäuse 4 eine Einheit mit dem Freiheitsgrad Null. Bei einer Auslenkung wird die Feder 12 so belastet, daß sie den Tasterhalter 10 gegen den Tastkopfgehäuseboden 13 zurückführt, wenn die Antastkraft nachläßt.

Die Lagerung, ausgeführt als Vielpunktlager, besteht erfindungsgemäß aus gleichmäßig über den Umfang des Tasterhalters 10 verteilten und in einer Ebene angeordneten Kugeln 14, welche im Tasterhalter 10 verankert sind. Eine Bohrung 15 am Befestigungsgrund jeder Kugel 14 dient zum Zuführen von Klebstoff 16 und zum Durchschlagen einer evtl. beschädigten Kugel 14. Jeder der sechzehn Kugeln 14 ist als Gegenkörper 17 ein Zylinder zugeordnet. Die Gegenkörper 17 sind so ausgerichtet, daß sich ihre Längsachsen parallel zur Längsachse des in der Nullage ruhenden Taststiftes 2 befinden. Damit der Tasterhalter 10 über jede Kugel 14 eine definierte Lage einnehmen kann, ist jeder Gegenkörper 17 um seine Längsachse drehbar gelagert sowie in Richtung seiner Längsachse verschiebbar.

Die Gegenkörper 17 sind schräg zu ihren Drehachsen geschnitten. Die Schnittflächen ergeben jeweils eine ebene Oberfläche 18. Alternativ können die Schnittflächen auch zylindrisch oder sphärisch gekrümmt sein. Durch eine derartige Ausbildung der Gegenkörper 17 kann die Sicherheit gegen Verdrehungen des Tasterhalters 10 erhöht werden.

Kernpunkt der vorliegenden Erfindung ist jedoch die Ausrichtung der Gegenkörper 17 zueinander und zu den Kugeln 14. Die Gegenkörper 17 zueinander und zu Achse gedreht, daß die schrägen Schnittflächen 18 entweder nach innen oder nach außen gerichtet sind und zwar abwechselnd. Jede der Kugeln 14 liegt also entweder an einer radial nach außen gerichteten oder an einer radial nach innen gerichteten schrägen Schnittfläche 18 eines Gegenkörpers 17 an. In ihrer Gesamtheit ergeben die so ausgerichteten Gegenkörper 17 eine exakte Lagerung für den Tasterhalter 10.

Da die Gegenkörper 17 leicht um ihre Achsen gedreht und axial verschoben werden können, lassen sie sich sehr gut an die Kugeln 14 des Tasterhalters 10 anpassen.

Nach der relativ einfach durchführbaren Einjustierung der Gegenkörper 17 werden diese fest mit dem Tastkopfgehäuseboden 13 verbunden, bevorzugt eingeklebt. Jede Lagerstelle wird somit durch das Zusammenwirken der Oberflächenbereiche der Kugeln 14 mit den Schnittflächen 18 der im Tastkopfgehäuse 4 bzw. seinem Boden 13 fest angeordneten Gegenkörper 17 gebildet.

Eine genaue und einfache Ausrichtung der schrägen Schnittflächen 18 der Gegenkörper 17 zu den Kugeln 14 wird dadurch erreicht, daß bei der Montage vor der Aushärtung des Klebstoffes, welcher die Gegenkörper 17 im Tastkopfgehäuseboden 13 nach der Montage fixieren soll, die Gegenkörper 17 mittels einer nicht gezeigten Vibrationseinrichtung automatisch, schnell und vollständig ausgerichtet werden. Die Vibrationseinrichtung enthält eine Federanordnung, welche jeden Zylinderkörper 17 in der Z-Richtung einjustiert. Durch laufende Verringerung der hochfrequenten Vibrationsamplituden wird sichergestellt, daß sich die Zylinderkörper 17 mit zunehmendem Aushärtungsgrad des Klebstoffes außerdem in eine stabile Lage um ihre eigene Achse drehen. Dabei ist natürlich eine anfängliche Grobausrichtung, bei der die schrägen Schnittflächen 18 abwechselnd einander gegenüber gestellt werden, erforderlich.

Die Zylinderkörper müssen nicht unbedingt - wie im Ausführungsbeispiel dargestellt - Bestandteil des Tastkopfgehäusebodens 13 sein, sie können ebenso gut in den Tasterhalter integriert werden. In diesem Fall müssen die Kugeln dann im Tastkopfgehäuseboden fixiert sein. Des weiteren sind außer der gezeigten Möglichkeit andere Paarungen der Lagerelemente möglich: z. B. Stifte mit sphärischer Oberfläche ./. Gegenkörper.

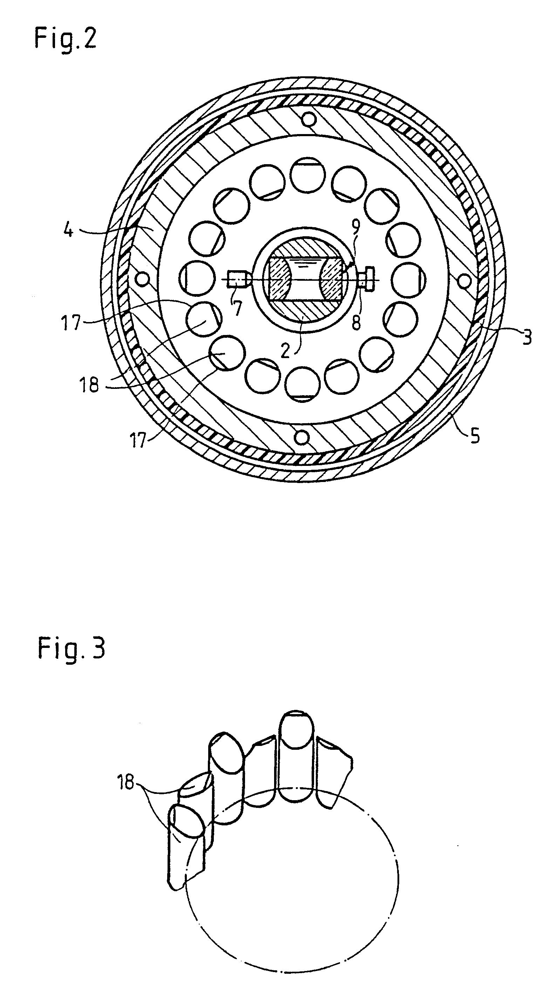

In dem Schnitt aus Figur 2 ist gezeigt, daß alle Gegenkörper 17 konzentrisch zur nicht bezeichneten Taststiftachse liegen. Die Schnittflächen 18 der Gegenkörper 17 sind in der Draufsicht zu erkennen. Da die Gegenkörper 17 in dem Taststiftgehäuseboden 13 um ihre Längsachsen drehbar befestigt sind, ist die Lage der Schnittflächen 18 von der Stellung der Gegenkörper 17 abhängig.

Figur 3 zeigt eine Anzahl von Gegenkörpern 17. Bewußt wurde auf die Darstellung anderer Bauelemente verzichtet. Die einzelnen Gegenkörper 17 lassen gut erkennen, daß die Oberflächen ihrer schrägen Schnittflächen 18 abwechselnd nach außen bzw. nach innen gerichtet sind. Anhand dieser Zeichnung ist gut erkennbar, daß die Lagerkugeln 14 - wenn sie jeweils die Schnittflächen 18 berühren - präzise und sicher von den Gegenkörpern 17 gefesselt werden.

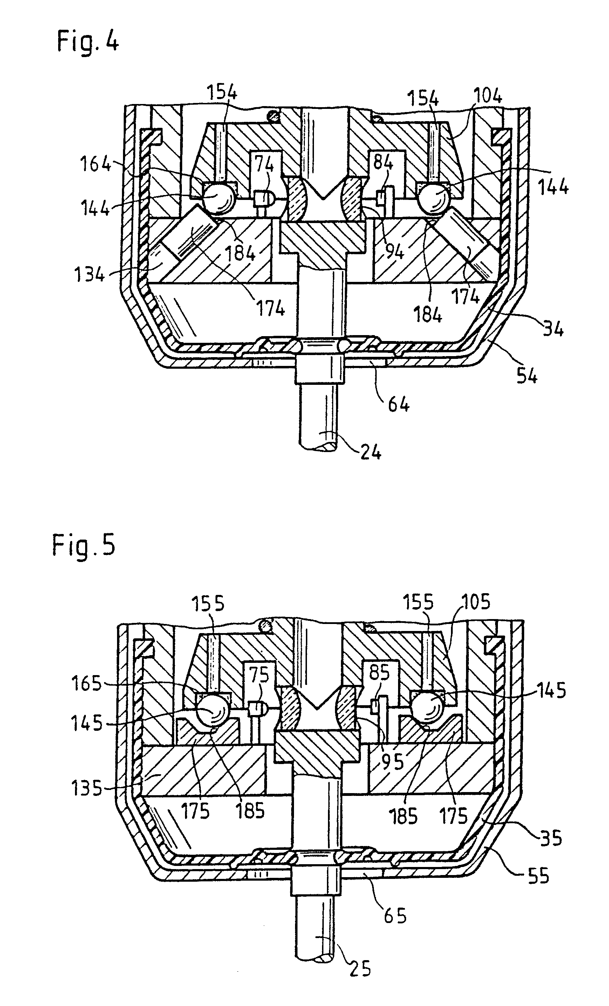

In Figur 4 wird in dem Ausschnitt des Tastkopfes eine weitere Ausführungsform für die Ausbildung der erfindungsgemäßen Lagerung der Tasterhalterung (104) gezeigt. Im Tastkopfgehäuseboden 134 sind schräg zur Achse des Taststiftes 24 verlaufende Bohrungen angebracht, in die Zylinder 174 eingepaßt sind. Die Zylinder 174 sind im Tastkopfgehäuseboden 134 längsverschieblich gelagert und ihre Stirnflächen 184 tangieren die Kugeln 144 der Taststiftlagerung. Der Tasterhalter 104 wird auf diese Weise genauso zentriert gelagert, wie nach dem ersten Ausführungsbeispiel. Dabei ist vorausgesetzt, daß die Zylinder 174 mit ihren Stirnflächen 184 in gleicher Weise abwechselnd radial nach innen bzw. radial nach außen gerichtet sind, wie dies beim Ausführungsbeispiel gemäß der Figuren 1 bis 3 beschrieben ist. Die Montage und Justierung erfolgt in analoger Weise wie bei dem vorbeschriebenen Beispiel.

Eine weitere Lösung stellt das Ausführungsbeispiel gemäß Figur 5 dar. Auf der Ebene des Taststiftgehäusebodens 135 sind konzentrisch zur Achse des Taststiftes 25 Formkörper 175 als Gegenkörper angeordnet, die jeweils radial verschieblich sind. Die Formkörper 175 weisen schräge Flächen 185 auf, die tangential an den durch Kugeln 145 gebildeten Lagerkörpern der Tasterhalterung 105 anliegen. Aus der Darstellung ist ersichtlich, daß die Formkörper 175 symmetrisch ausgebildet sind. Für die Montage bedeutet dies, daß gleichartige Formkörper 175 die Lagerung des Tasterhalters bilden, wobei lediglich abwechselnd die äußere bzw. innere Formschräge 185 an die Kugeln angelegt wird. Dazu ist nur eine radiale Verschiebung des jeweiligen Formkörpers 175 erforderlich. Nach beendeter Montage werden die Formkörper 175 auf dem Tastkopfgehäuseboden 135 fixiert.

Der Fachmann wird im Rahmen der Ansprüche weitere Ausführungsformen angeben können.

## Ansprüche

1. Mehrkoordinaten-Tastkopf mit wenigstens einem, in mehrere Koordinatenrichtungen auslenkbaren Taststift, der durch eine Rückstellkraft in eine seine definierte Nullage bestimmende Lagerung gedrängt wird, welche durch das Zusammenwirken von Oberflächenbereichen mehrerer Lagerkörper mit Oberflächenbereichen einer entsprechenden Anzahl von Gegenkörpern gebildet wird, wobei die Lagerkörper und die diesen zugeordneten Gegenkörper weitestgehend konzentrisch um die Tastkopfachse angeordnet und radial und/oder axial einstellbar sind, dadurch gekennzeichnet, daß jeder Gegenkörper (17, 174, 175) eine Stützfläche (18, 184, 185) für jeweils einen Lagerkörper (14, 144, 145) aufweist, wobei die Stützflächen (18, 184, 185) schräg zur Achse des Taststiftes (2, 24, 25) verlaufen und jeweils entweder radial nach innen oder radial nach außen gerichtet sind, so daß jeder Lagerkörper (14, 144, 145) entweder von einer radial nach innen oder von einer radial nach außen gerichteten Stützfläche (18, 184, 185) tangiert wird.

2. Mehrkoordinaten-Tastkopf nach Anspruch 1, dadurch gekennzeichnet, daß die Stützflächen durch Schnittflächen (18) von schräg zu ihren Längsachsen geschnittenen Zylindern (17) gebildet werden, die parallel zur Achse des Taststiftes (2) im Tastkopfgehäuseboden (13) eingesetzt sind.

3. Mehrkoordinaten-Tastkopf nach Anspruch 1, dadurch gekennzeichnet, daß die Stützflächen durch Stirnflächen (184) von Zylindern (174) oder Prismen gebildet werden, deren Längsachsen schräg zur Achse des Taststiftes (24) verlaufen.

4. Mehrkoordinaten-Tastkopf nach Anspruch 1, dadurch gekennzeichnet, daß die Stützflächen durch Oberflächenbereiche (185) von Formkörpern (175) gebildet werden, die schräg zur Achse des Taststiftes (25) verlaufen.

5. Mehrkoordinaten-Tastkopf nach den Ansprüchen 1 - 4, dadurch gekennzeichnet, daß die Stützflächen (18, 184, 185) ebene Flächen sind.

6. Mehrkoordinaten-Tastkopf nach den Ansprüchen 1 - 4, dadurch gekennzeichnet, daß die Stützflächen zylindrisch gekrümmte Flächen sind.

7. Mehrkoordinaten-Tastkopf nach den Ansprüchen 1 - 4, dadurch gekennzeichnet, daß die Stützflächen sphärisch gekrümmte Flächen sind.

8. Mehrkoordinaten-Tastkopf nach den Ansprüchen 1 - 4, dadurch gekennzeichnet, daß die Stützflächen asphärisch gekrümmte Flächen sind.

## Claims

1. Multi-coordinate feeler head with at least one feeler rod deflectable in a plurality of coordinate directions and which is forced back into a mounting determining its defined zero position by a restoring force, which mounting is formed by the cooperation of surface regions of a plurality of bearing bodies with surface regions of a corresponding number of counter-bodies, wherein the bearing bodies and the counter-bodies associated therewith are arranged to the maximum degree possible concentrically around the feeler head axis and are adjustable radially and/or axially, characterized in that each counter-body (17, 174, 175) has an abutment face (18, 184, 185) for a respective bearing body (14, 144, 145), the abutment faces (18, 184, 185) running obliquely relative to the axis of the feeler rod (2, 24, 25) and each being directed either radially inwardly or radially outwardly, so that each bearing body (14, 144, 145) is tangent either to a radially inwardly directed or a radially outwardly directed abutment face (18, 184, 185).

2. Multi-coordinate feeler head according to claim 1, characterized in that the abutment faces are formed by section faces (18) of cylinders (17) sectioned obliquely to their longitudinal axes, the cylinders being fitted parallel to the axis of the feeler rod (2) in the feeler head housing bottom (13).

3. Multi-coordinate feeler head according to claim 1, characterized in that the abutment faces are formed by end faces (184) of cylinders (174) or prisms, whose longitudinal axes run obliquely relative to the axis of the feeler rod (24).

4. Multi-coordinate feeler head according to claim 1, characterized in that the abutment faces are formed by surface regions (185) of shaped bodies (175), which run obliquely relative to the axis of the feeler rod (25).

5. Multi-coordinate feeler head according to claims 1 - 4, characterized in that the abutment faces (18, 184, 185) are flat surfaces.

6. Multi-coordinate feeler head according to claims 1 - 4, characterized in that the abutment faces are cylindrically curved surfaces.

7. Multi-coordinate feeler head according to claims 1 - 4, characterized in that the abutment faces are spherically curved surfaces.

8. Multi-coordinate feeler head according to claims 1 - 4, characterized in that the abutment faces are aspherically curved surfaces.

**Revendications**

1. Palpeur multi-axes comprenant au moins une tige de palpeur susceptible d'être déviée suivant plusieurs axes de coordonnées et poussée par une force de rappel contre un appui déterminant sa position zéro définie et formé par la coopération de zones superficielles de plusieurs corps d'appui avec des zones superficielles d'un nombre correspondant de corps antagonistes, les corps d'appui et les corps antagonistes associés étant disposés de façon sensiblement concentrique autour de l'axe du palpeur et étant réglables radialement et/ou axialement, *caractérisé* par le fait que chacun des corps antagonistes (17, 174, 175) présente une surface de support (18, 184, 185) pour chaque fois un corps d'appui (14, 144, 145), les surfaces de support (18, 184, 185) s'étendant de façon oblique par rapport à l'axe de la tige de palpeur (2, 24, 25) et étant orientées chaque fois soit radialement vers l'intérieur, soit radialement vers l'extérieur, de sorte que chaque corps d'appui (14, 144, 145) se trouve en contact tangentiel avec une surface de support (18, 184, 185) dirigée soit radialement vers l'intérieur, soit radialement vers l'extérieur.

2. Palpeut multi-axes suivant la revendication 1, *caractérisé* par le fait que les surfaces de support sont formées par des surfaces de coupe (18) de cylindres (17) coupés de façon oblique par rapport à leurs axes longitudinaux et rapportés parallèlement à l'axe de la tige de palpeur (2) dans le fond (13) du carter de palpeur.

3. Palpeur multi-axes suivant la revendication 1, *caractérisé* par le fait que les surfaces de support sont formées par les surfaces frontales (184) de cylindres (174) ou de prismes dont les axes longitudinaux sont orientés de façon oblique par rapport à l'axe de la tige de palpeur (24).

4. Palpeur multi-axes suivant la revendication 1, *caractérisé* par le fait que les surfaces de support sont formées par des zones superficielles (185) de corps profilés (175) qui s'étendent de façon oblique par rapport à l'axe de la tige de palpeur (25).

5. Palpeur multi-axes suivant les revendications 1 à 4, *caractérisé* par le fait que les surfaces de support (18, 184, 185) sont des surfaces planes.

6. Palpeur multi-axes suivant les revendications 1 à 4, *caractérisé* par le fait que les surfaces de support sont des surfaces à courbure cylindrique.

7. Palpeur multi-axes suivant les revendications 1 à 4, *caractérisé* par le fait que les surfaces de support sont des surfaces à courbure sphérique.

8. Palpeur multi-axes suivant les revendications 1 à 4, *caractérisé* par le fait que les surfaces de support sont des surfaces à courbure asphérique.

Fig. 1

Fig.2

Fig.3

Fig. 4

Fig. 5